# EUROPÄISCHE PATENTSCHRIFT

(11) **EP 0 561 018 B1**
(45) Veröffentlichungstag und Bekanntmachung des Hinweises auf die Patenterteilung: **02.08.1995**
(21) Anmeldenummer: 92104623.1
(22) Anmeldetag: 18.03.1992
(51) Int. Cl.: F16K 1/52, G05D 16/06, G05D 16/16

(54) **Membrangesteuerter Gasdruckregler mit einstellbarer Drossel**
Diaphragm controlled gas pressure regulator with adjustable restrictor
Régulateur de pression de gaz à membrane avec préréglage ajustable

(43) Veröffentlichungstag der Anmeldung: 22.09.1993
(73) Patentinhaber: HONEYWELL B.V., NL-1101 EA Amsterdam Z.O. (NL)
(72) Erfinder: Pragt, Johan H., NL-7741 SB Coevorden (NL)
(74) Vertreter: Rentzsch, Heinz, Dipl.-Ing.

(56) Entgegenhaltungen:
- AT-B- 216 717
- DE-B- 2 110 149
- DE-U- 1 855 595
- DE-U- 7 925 305
- FR-A- 1 142 046
- US-A- 1 583 800
- US-A- 4 156 519

## Beschreibung

Die Erfindung betrifft einen membrangesteuerten Gasdruckregler gemäß Oberbegriff des Anspruchs 1. Gasdruckregler dieser Art sind in zahlreichen Ausführungsformen bekannt und zwar sowohl als direktwirkende Druckregler (vgl. DE-AS 12 33 794) als auch in der Ausgestaltung als sogenannte Servodruckregler (vgl. DE-PS 26 46 310).

Ferner zeigt DE-B 21 10 149 einen membrangesteuerten Druckregler für Flüssigkeiten bei dem der Membranantrieb in einem vom Ventilgehäuse getrennten Membrangehäuse untergebracht und die Ventilfeder in Öffnungsrichtung des Schließkörpers wirksam ist. Der Schließkörper eines zwischen Reglereinlaß und -auslaß eingeschalteten Ventils stützt sich über eine Ventilstange an der in einem besonderen Membrangehäuse untergebrachten Arbeitsmembran ab. Auf der Einlaßseite des Ventilgehäuses ist zwischen Reglereinlaß und Ventilsitz ein wenigstens eine Durchbrechung aufweisender Drehschieber angeordnet, dessen Durchbrechung im Zusammenwirken mit einer gehäusefesten Kulisse den wirksamen Durchflußquerschnitt des Ventils bestimmt. Eine Einstellvorrichtung für den Drehschieber ragt durch die der Trennwand gegenüberliegende Wand des Ventilgehäuses abgedichtet nach außen.

Um einen gattungsgemäßen Druckregler im eingebauten Zustand an unterschiedliche Arbeitsbedingungen, z.B. Eingangsgasdruckbereiche, Verbrauchsdruckbereiche oder Verbrauchsvolumen, anpassen zu können, ist es vielfach üblich, dem Druckregler ein von Hand betätigbares Einstell- oder Drosselventil vor- bzw. nachzuschalten.

Aufgabe der Erfindung ist es, eine solche zusätzliche Einstellmöglichkeit am Druckregler selbst zu schaffen, ohne dabei dessen Raumbedarf zu erhöhen. Diese Aufgabe wird gelöst durch die im Anspruch 1 gekennzeichnete Erfindung. Sie zeichnet sich durch einen einfachen und kompakten Aufbau aus und gestattet eine nachträgliche Einstellung bzw. Anpassung des Druckreglers von der Gehäuseaußenseite her. Dies kann auch später im Zuge einer Wartung der den Druckregler aufweisenden Anlage erfolgen. Vorteilhafte Ausgestaltungen der Erfindung ergeben sich aus den Unteransprüchen.

Die Erfindung wird nachfolgend anhand zweier in den Zeichnungen wiedergegeber Ausführungsbeispiele erläutert.

Darin zeigt:
- Fig. 1: eine erste Ausführungsform des Druckreglers im Schnitt;
- Fig. 2: den Drehschieber samt Zahnkranz und Halterung als Einzelteil;
- Fig. 3: eine zweite Ausführungsform; und
- Fig. 4a: den zugehörigen Drehschieber schematisch in Draufsicht, und
- Fig. 4b: in seitlicher Ansicht.

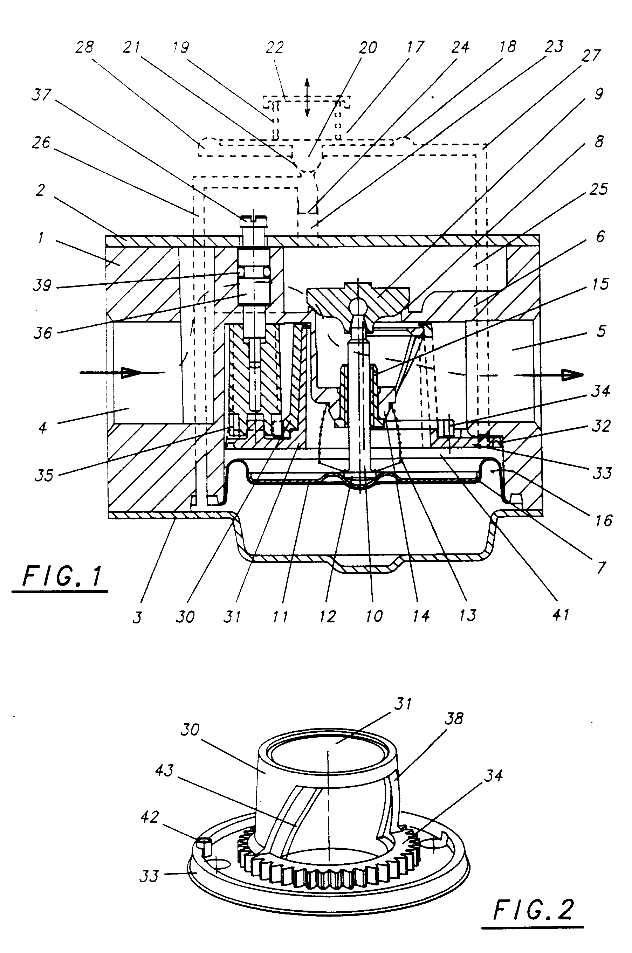

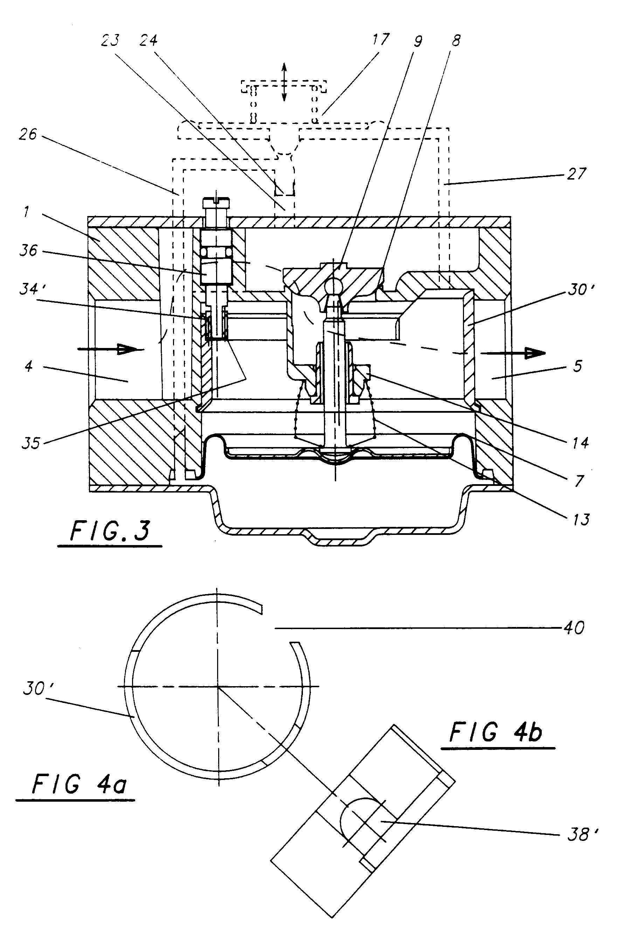

Beide Ausführungsformen nach den Figuren 1 und 3 zeigen einen Servodruckregler, wie er beispielsweise in einem Gasregelgerät zur Versorgung eines Brenners eingesetzt werden kann. Das Gehäuse 1 ist auf der Oberseite durch eine Deckplatte 2 und auf der unteren Seite durch einen Deckel 3 verschlossen. Zwischen Einlaß 4 und Auslaß 5 befindet sich eine Trennwand 6, welche sich parallel zur Arbeitsmembran 7 des Druckreglers erstreckt. In der Trennwand 6 ist ein Ventilsitz 8 angeordnet, der mit einem Schließkörper 9 ein Ventil bildet. Der Schließkörper 9 stützt sich über eine Ventilstange 10 und einen Membranteller 11 an der Arbeitsmembran 7 ab. Ein Bund 12 am unteren Ende der Ventilstange 10 dient als Abstützung für die Schließfeder 13. Das gegenüberliegende Ende der Schließfeder 13 liegt an einem gehäusefesten Ansatz 14 an, der von der Trennwand 6 getragen wird und eine Führungshülse 15 für die Ventilstange 10 hält. Die Schließfeder 13 versucht über die Ventilstange 10 den Schließkörper 9 gegen den Sitz 8 zu drücken und damit das Ventil 8, 9 zu schließen. Dieser Kraft der Feder 13 wirkt der Druck in der Membrankammer 16 entgegen. Er wird erzeugt von einem schematisch dargestellten Servoventil 17, welches aus einer Steuermembran 18, einer Schließfeder 19, einem Schließkörper 20 und einem Ventilsitz 21 besteht. Die Vorspannung der Schließfeder 19 kann durch eine Abstützkappe 22 in bekannter Weise eingestellt werden. Der Ventilsitz 21 ist über einen Kanal 23 und eine Drosselstelle 24 an die Einlaßkammer 25 des Druckreglers angeschlossen. Der Raum zwischen Drosselstelle 24 und Ventilsitz 21 steht ferner über eine Leitung 26 mit der Membrankammer 16 in Verbindung. Eine Leitung 27 verbindet den Raum 28 unterhalb der Steuermembran 18 mit einem Raum 41 oberhalb der Arbeitsmembran 7.

Der bislang beschriebene Druckregler arbeitet in herkömmlicher Weise wie folgt: Auf die Arbeitsmembran 7 wirkt von unten der Steuerdruck in der Leitung 26 und von oben die Kraft der Feder 13 sowie der Druck am Auslaß 5. Zur Einstellung dieses Druckes dient der Servodruckregler 17, dessen Feder 19 sich an der in Pfeilrichtung verstellbaren Federkappe 22 abstützt. Das Gleichgewicht der von unten und von oben auf die Arbeitsmembran 7 einwirkenden Kräfte führt zu einer bestimmten Stellung des Schließkörpers 9 gegenüber dem Ventilsitz 8. Steigt aus irgendwelchem Grunde der Druck am Auslaß 5 und damit auch im Raum 41 an, so gelangt dieser erhöhte Druck über die Leitung 27 in den Raum 28 unterhalb der Steuermembran 18 und hebt die Steuermembran gegen die Kraft der Feder 19 an. Damit öffnet das Ventil 20, 21, so daß ein Teil des vom Einlaß 4 über die Einlaßkammer 25 sowie den Kanal 23 an die Drosselstelle 24 gelangenden Druckes über das Ventil 20, 21 zum Raum 41 und zum Auslaß 5 hin abgebaut wird und folglich der im Kanal 26 erzeugte Steuerdruck für die Arbeitsmembran 7 absinkt. Damit kann die Schließfeder 13 den Schließkörper 9 in Schließrichtung bewegen und den Durchlaß durch das Ventil 8, 9 drosseln. Der Druck am Auslaß 5 sinkt auf den zuvor eingestellten Wert.

Bei einem Anstieg des Einlaßdruckes steigt zugleich der Druck unterhalb des Schließkörpers 20 an und hebt diesen gegen die Kraft der Feder 19 vom Ventilsitz 21 ab. Damit wird der Druckanstieg im Kanal 26 über den Kanal 27 zum Raum 41 und zum Auslaß 5 hin abgebaut. Der hierdurch absinkende Steuerdruck im Kanal 26 führt unter dem Einfluß der Schließfeder 13 zu einer Bewegung des Schließkörpers 9 in Richtung auf den Ventilsitz 8. Der Auslaßdruck steigt also nicht an, sondern behält den vorher eingestellten Wert bei.

Insoweit stimmen Aufbau und Wirkungsweise der Druckregler nach den Figuren 1 und 3 überein. Zusätzlich ist in Fig. 1 im Raum zwischen der Arbeitsmembran 7 und der Trennwand 6 ein in Fig. 2 gezeigter, mit wenigstens einer Durchbrechung 38 versehener, im wesentlichen zylindrischer Drehschieber 30 vorgesehen, dessen Durchbrechung 38 im Zusammenwirken mit einer gehäusefesten Kulisse 31 den wirksamen Durchflußquerschnitt des Ventils bestimmt. In Figur 1 ist die Kulisse 31 durch eine an einer Membrangehäusewand 32 befestigte Buchse gebildet, die zugleich als Lager für den Drehschieber 30 dient. Die Buchse 31 ist hierzu mit einem Flansch 33 versehen, der an der Membrangehäusewand 32 abgedichtet befestigt ist. Der Drehschieber 30 umgibt die Kulisse 31 und weist an seinem unteren Rand einen Zahnkranz 34 auf, in welchen ein Zahnrad 35 eingreift. Dieses ist an einem Zapfen 36 befestigt, dessen dem Zahnkranz 34 gegenüberliegendes Ende abgedichtet durch die Deckplatte 2 nach außen ragt und mit einer Angriffsfläche für ein Einstellwerkzeug, beispielsweise mit einem Schraubendreherschlitz 37 versehen ist. Die Durchbrechung 38 im Drehschieber 30 wirkt mit der eine gehäusefeste Kulisse 39 bildenden Wand der Buchse 31 zusammen, die eine Durchbrechung 43 aufweist. Sie verändert beim Drehen des Drehschiebers 30 den wirksamen Durchlaßquerschnitt. Nach außen hin ist der Zapfen 36 durch einen O-Ring 39 abgedichtet. Eine Durchführung 42 im Flansch 33 verbindet die Leitung 27 mit dem Raum 41.

Während bei der Ausführungsform nach Figur 1 der Zahnkranz 34 am äußeren Umfang des Drehschiebers 31 vorgesehen ist, zeigt Fig. 3 eine Ausführungsform, bei der der Drehschieber 30' auf seiner Innenseite einen Zahnkranz 34' trägt, der sich ebenso wie in Figur 1 entweder über den gesamten Umfang oder nur über einen Teil des Umfanges des Drehschiebers 30' erstreckt.

Auch hier trägt ein Zapfen 36 an seinem unteren Ende ein Zahnrad oder Ritzel 35, welches mit dem Zahnkranz 34' zusammenwirkt. Die Ausführungsform nach Figur 3 zeichnet sich durch einen besonderes einfachen Aufbau aus, indem dort der Drehschieber 30' (vgl. Figur 4a) durch eine an einer Stelle 40 achsparallel geschlitzte Zylinderbuchse 30' aus elastischem Werkstoff gebildet ist. Eine besondere Kulisse kann hier entfallen, weil die Zylinderbuchse 30' mit ihrer Durchbrechung 38' unmittelbar mit der üblicherweise kreisrunden Auslaßöffnung 5 des Reglergehäuses zusammenwirkt. Diese Auslaßöffnung 5 bildet also die gehäusefeste Kulisse. Die Wirkungsweise des in den Figuren 3, 4a und 4b wiedergegebenen Druckreglers ist die gleiche wie zuvor anhand von Figur 1 und 2 beschrieben.

In beiden gezeigten Ausführungsbeispielen wird der Druck in der Membrankammer 16 durch den Steuerdruck eines Servoreglers 17 bestimmt. Die Erfindung ist jedoch nicht auf servogesteuerte Druckregler beschränkt. Sie kann gleichermaßen auch bei direktgesteuerten Druckreglern Anwendung finden, bei denen in bekannter Weise der Druck im Raum 41 und am Auslaß 5 über eine Arbeitsmembran in Schließrichtung auf den Schließkörper 9 einwirkt, so daß bei einem Druckanstieg am Auslaß der Durchfluß gedrosselt und bei einem Druckabfall am Auslaß der Durchlaßquerschnitt vergrößert wird. Auch hier umgibt der Drehschieber im Raum zwischen Ventilsitz 8 und Arbeitsmembran 7 die Ventilstange 10, so daß ein raumsparender Aufbau gewährleistet ist. Ein nicht dargestelltes, aber in Aufbau und Wirkungsweise bekanntes Einschaltmagnetventil dient der Aktivierung des Druckreglers.

## Patentansprüche

1. Membrangesteuerter Gasdruckregler mit:
a) einem einen Reglereinlaß (4) und einen Reglerauslaß (5) aufweisenden Gehäuse (1, 2,3);
b) einer innerhalb des Gehäuses (1, 2, 3) angeordneten Arbeitsmembran (7);
c) einem sich über eine Ventilstange (10) an der Arbeitsmembran (7) abstützenden Schließkörper (9) eines zwischen Reglereinlaß (4) und Auslaß (5) eingeschalteten Ventils (8, 9);
d) einer sich parallel zur Membranfläche erstreckenden, den Ventilsitz (8, 9) aufweisenden Trennwand (6), sowie
e) einer der Kraft der Arbeitsmembran (7) entgegenwirkenden, sich einseitig gehäusefest abstützenden Schließfeder (13) für den Schließkörper (9); wobei
f) die Arbeitsmembran (7) stromabwärts von der Trennwand (6), aufder Seite des Reglerauslasses, angeordnet und vom durch das Ventil fließenden Gas direkt beaufschlagbar ist,
**dadurch gekennzeichnet,** daß
g) im Raum zwischen Arbeitsmembran (7) und Trennwand (6) ein mit wenigstens einer Durchbrechung (38) versehener zylindrischer Drehschieber (30, 30') angeordnet ist, dessen Durchbrechung (38) im Zusammenwirken mit einer gehäusefesten Kulisse (31, 43) den wirksamen Durchflußquerschnitt bestimmt;
h) am Drehschieber (30, 30') ein Zahnkranz (34, 34') vorgesehen ist, und
i) eine abgedichtet durch das Reglergehäuse (1, 2, 3) hindurchragende Einstellvorrichtung (35, 36, 37) ein in den Zahnkranz (34, 34') eingreifendes Zahnrad (35) trägt.

2. Druckregler nach Anspruch 1, **dadurch gekennzeichnet,** daß der Zahnkranz (34) auf der Außenseite des Drehschiebers (30) vorgesehen ist.

3. Druckregler nach Anspruch 1, **dadurch gekennzeichnet,** daß der Zahnkranz (34') auf der Innenseite des Drehschiebers (30') vorgesehen ist.

4. Druckregler nach einem der Ansprüche 1 bis 3, **dadurch gekennzeichnet,** daß der Drehschieber (30') durch eine an einer Stelle (40) achsparallel geschlitzte Zylinderbuchse aus elastischem Werkstoff gebildet ist.

5. Drehschieber nach einem der Ansprüche 1 bis 4, **dadurch gekennzeichnet,** daß die Kulisse durch eine hohlzylindrische Gehäuseinnenwand gebildet ist, in welche der Reglerauslaß (5) oder -einlaß mündet.

6. Druckregler nach einem der Ansprüche 1 bis 4, **dadurch gekennzeichnet,** daß die Kulisse durch eine in das Gehäuse (1) eingesetzte Buchse (31, 33) gebildet ist, welche eine mit dem Reglerauslaß (5) kommunizierende Öffnung (43) aufweist.

7. Druckregler nach einem der Ansprüche 1 bis 6, **dadurch gekennzeichnet,** daß an der Trennwand (6) ein eine Führungsbuchse (15) für die Ventilstange (10) haltender Ansatz (14) vorgesehen ist und in den Raum zwischen Trennwand (6) und Membran (7) hineinragt.

8. Druckregler nach einem der Ansprüche 1 bis 7, **dadurch gekennzeichnet,** daß er als direktwirkender Druckregler ausgebildet ist und sein Ausgangsdruck in Schließrichtung des Ventils (8, 9) auf die Arbeitsmembran (7) einwirkt.

9. Druckregler nach einem der Ansprüche 1 bis 7, **dadurch gekennzeichnet,** daß er als Servodruckregler ausgebildet ist und der von einem Druckgeber (17) gelieferte Steuerdruck in Öffnungsrichtung auf die Arbeitsmembran (7) einwirkt.

10. Druckregler nach einem der Ansprüche 1 bis 9, **dadurch gekennzeichnet,** daß sich der Zahnkranz (34, 34') über den gesamten Umfang oder nur über einen Teil des Umfangs des Drehschiebers (30, 30') erstreckt.

## Claims

1. Diaphragm-operated gas pressure regulator comprising:
a) a housing (1, 2, 3) having a regulator inlet (4) and a regulator outlet (5);
b) a working diaphragm (7) located inside said housing (1, 2, 3);
c) a closure member (9) of a valve (8, 9) provided between said regulator inlet (4) and said regulator outlet, which closure member (9) abuts against said working diaphragm (7) via a valve rod (10);
d) a separation wall (6) comprising the valve seat (8) and extending in parallel to the surface of said diaphragm; and
e) a closure spring (13) for said closure member operating against the force of said working diaphragm (7) and abuting with one end against the housing; wherein
f) the working diaphragm (7) is located downstream from the separation wall (6) at the side of the regulator outlet and is directly exposable to the gas flowing through the valve;
**characterized in that**
g) a cylindrical rotary spool valve (30, 30') is provided in the space between the working diaphragm (7) and the separation wall (6) and has at least one aperture (38), which aperture by cooperation with a stationary apertured bushing (31, 43) determines the effective flow cross-section;
h) a gear ring (34, 34') is provided at said rotary spool (30, 30'); and
i) adjusting means (35, 36, 37) extend through said regulator housing (1, 2, 3) and are sealed with respect to the housing and carry a gear wheel (35) engaging said gear ring (34, 34').

2. The pressure regulator of claim 1, **characterized in that** the gear ring (34) is provided at the outside of the rotary spool (30).

3. The pressure regulator of claim 1, **characterized in that** the gear ring (34') is provided at the internal side of the rotary spool (30').

4. The pressure regulator according to one of the claims 1 to 3, **characterized in that** the rotary spool (30') is formed by a cylindrical bushing made of resilient material, which bushing is slotted at one place (40) in axial direction.

5. The pressure regulator according to one of the claims 1 to 4, **characterized in that** the apertured bushing is formed by a hollow cylindrical internal wall of the housing with the regulator outlet (5) or inlet porting into said wall.

6. The pressure regulator according to one of the claims 1 to 4, **characterized in that** the apertured bushing is formed by a bushing (31, 33) which is inserted into said housing (1) and which has an opening (43) communicating with said regulator outlet (5).

7. The pressure regulator according to one of the claims 1 to 6, **characterized in that** a projection (14) holding a guiding bushing (15) for the valve rod (10) is provided at said separation wall (6) and projects into the space between said separation wall (6) and said diaphragm (7).

8. The pressure regulator according to one of the claims 1 to 7, **characterized in that** it is built as a directly operating pressure regulator, wherein its outlet pressure acts onto said operating diaphragm (7) in closing direction of said valve (8, 7).

9. The pressure regulator according to one of the claims 1 to 7, **characterized in that** it is built up as a servo pressure regulator, wherein the control pressure delivered by a pressure source (17) operates in opening direction onto said working diaphragm (7).

10. The pressure regulator according to one of the claims 1 to 9, **characterized in that** the gear ring (34, 34') extends along the total circumference or along only part of the circumference of the rotary spool (30, 30').

## Revendications

1. Régulateur de pression de gaz à membrane comportant :
a) un carter (1, 2, 3) qui présente une entrée de régulateur (4) et une sortie de régulateur (5) ;
b) une membrane active (7) placée à l'intérieur du carter (1, 2, 3) ;
c) un obturateur (9) d'une soupape (8, 9) intercalée entre l'entrée (4) du régulateur et la sortie (5), obturateur qui s'appuie sur la membrane active (7) par une tige de soupape (10) ;
d) une cloison (6) qui s'étend parallèlement à la surface de la membrane et qui comporte le siège de soupape (8, 9), ainsi
e) qu'un ressort de fermeture (13) pour l'obturateur (9), qui s'appuie d'un côté sur une partie solidaire du carter et qui agit à l'encontre de la force de la membrane active (7),
f) la membrane active (7) étant placée en aval de la cloison (6), du côté de la sortie du régulateur, et pouvant être sollicitée directement par le gaz qui traverse la soupape,
**caractérisé en ce**
g) qu'un tiroir rotatif cylindrique (30, 30'), pourvu d'au moins une découpure (38), est placé dans l'espace entre la membrane active (7) et la cloison (6), tiroir dont la découpure (38) détermine, en coopération avec une coulisse (31, 43) fixée au carter, la section d'écoulement effective ;
h) qu'une couronne dentée (34, 34') est prévue sur le tiroir rotatif (30, 30') et
i) qu'un dispositif de réglage (35, 36, 37), qui traverse le carter (1, 2, 3) du régulateur, de façon étanche, porte une roue dentée (35) qui engrène avec la couronne dentée (34, 34').

2. Régulateur de pression selon la revendication 1, **caractérisé en ce** que la couronne dentée (34) est prévue sur la face extérieure du tiroir rotatif (30).

3. Régulateur de pression selon la revendication 1, **caractérisé en ce** que la couronne dentée (34') est prévue sur la face intérieure du tiroir rotatif (30').

4. Régulateur de pression selon l'une des revendications 1 à 3, **caractérisé en ce** que le tiroir rotatif (30') est formé par une douille cylindrique en matériau élastique, qui est fendue à un endroit (40) parallèlement à l'axe.

5. Régulateur de pression selon l'une des revendications 1 à 4, **caractérisé en ce** que la coulisse est formée par une paroi intérieure du carter, en forme de cylindre creux, dans laquelle débouche la sortie (5) du régulateur ou l'entrée du régulateur.

6. Régulateur de pression selon l'une des revendications 1 à 4, **caractérisé en ce** que la coulisse est formée par une douille (31, 33), insérée dans le carter (1), qui présente une ouverture (43) communiquant avec la sortie (5) du régulateur.

7. Régulateur de pression selon l'une des revendications 1 à 6, **caractérisé en ce** qu'un appendice (14), qui maintient une douille de guidage (15) pour la tige de soupape (10), est prévu sur la cloison (6) et fait saillie dans l'espace entre la cloison (6) et la membrane (7).

8. Régulateur de pression selon l'une des revendications 1 à 7, **caractérisé en ce** qu'il est conçu sous forme d'un régulateur de pression à action directe et sa pression de départ agit sur la membrane active (7) dans le sens de la fermeture de la soupape (8, 9).

9. Régulateur de pression selon l'une des revendications 1 à 7, **caractérisé en ce** qu'il est conçu sous forme d'un régulateur de pression à servocommande et la pression de commande, fournie par un capteur de pression (17), agit sur la membrane active (7) dans le sens de l'ouverture.

10. Régulateur de pression selon l'une des revendications 1 à 9, **caractérisé en ce** que la couronne dentée (34, 34') s'étend sur toute la périphérie ou seulement sur une partie de la périphérie du tiroir rotatif (30, 30').
